# EUROPÄISCHE PATENTSCHRIFT

(11) **EP 2 380 522 B1**
(45) Veröffentlichungstag und Bekanntmachung des Hinweises auf die Patenterteilung: **08.11.2017**
(21) Anmeldenummer: 10004164.9
(22) Anmeldetag: 20.04.2010
(51) Int. Cl.: A61C 8/00, A61C 19/06

(54) **Zahnmedizinisches Implantat**
Dental implant
Implant médical dentaire

(43) Veröffentlichungstag der Anmeldung: 26.10.2011
(73) Patentinhaber: ZL Microdent-Attachment GmbH & Co. KG, 58339 Breckerfeld (DE)
(72) Erfinder: Clostermann, Volkhard-Hagen, 58097 Hagen (DE); Graf, Hans-Ludwig, Prof. Dr. med. dent., 04451 Borsdorf (DE); Schreckenbach, Joachim P., Dr. rer. nat., 09337 Hohenstein-Ernstthal (DE)
(74) Vertreter: Patentanwälte Dörner & Kötter PartG mbB

(56) Entgegenhaltungen:
- EP-A1- 1 943 977
- EP-A1- 1 943 979
- US-A1- 2007 016 163

## Beschreibung

Die Erfindung betrifft ein zahnmedizinisches Implantat nach dem Oberbegriff des Patentanspruchs 1. Die Erfindung betrifft weiterhin einen zahnmedizinischen Implantataufbau zur Befestigung in einem zahnmedizinischen Implantat nach dem Oberbegriff des Patentanspruchs 5. Die Erfindung betrifft darüber hinaus ein Verfahren zum Verfüllen von nach Einbringung eines zahnmedizinischen Implantataufbaus in ein zahnmedizinisches Implantat verbleibenden Hohlräumen nach dem Patentanspruch 9.

Zahnärztliche Implantatsysteme werden häufig als zwei- und mehrteilige Konstruktionen ausgeführt, um zum Einen eine unbelastete Einheilung des eigentlichen Implantatkörpers zu ermöglichen und zum Anderen eine gute Servicebarkeit über die gesamte Verweildauer des Therapiemittels im Körper zu erreichen. Dies hat zwingend zur Folge, dass die Konstruktionen innere Spalten und Hohlräume aufweisen, die mit Körperflüssigkeiten gefüllt und von Mikroorganismen besiedelt werden können. Im Zuge dieses Vorganges entstehen gesetzmäßig Biofilme an den inneren Implantatoberflächen. Biofilme sind adsorbierte körpereigene Stoffe auf einer alloplastischen Oberfläche in denen Mikroorganismen (vor allem Bakterien) leben. Diese Mikroorganismen sind durch die eigentümliche Struktur des Biofilmes gegen angreifende Therapeutika (z. B. Antibiotika) so gut geschützt, dass allgemein davon ausgegangen wird, dass diese Erreger mit normalen Antibiotikadosen nicht oder nur sehr schwer angreifbar sind. Außer dem Aufbau derartiger Biofilme wird auch das gesamte Volumen der innerimplantären Hohlräume mit biogenem Material und Mikroorganismen gefüllt. Die Folge davon ist eine innere Kontamination der Implantatkonstruktion, die in Geruch und Geschmack, weitgehend auch in der mikrobiellen Erregerzusammensetzung dem Krankheitsbild einer Gangrän am natürlichen Zahn gleicht. Diese Besiedlung mit Mikroorganismen kann die Entzündung der perümplantären Gewebe (Perümplantitis) auslösen oder begünstigen, welche wiederum die Funktionsdauer eines Implantates begrenzt. Implantatsysteme bei denen nichtklebende lasttragende elastische Bauteile an der technischen Ausbildung der Schnittstelle zwischen Implantat und Aufbauteil beteiligt und die verbleibenden Hohlräume nicht gefüllt sind, zeigen durch den unter der intermittierenden (Kau-)Last eintretenden Pumpeffekt eine so starke mikrobielle Besiedlung, dass durch das regelmäßige Auspressen des mikrobiellen Implantatinhaltes in das perümplantäre Gewebe verstärkt Knochenabbauvorgänge ausgelöst werden.

Mit mechanischen Mitteln ist es bisher nicht gelungen, einen dauerhaften bakteriendichten Abschluss des Implantatinneren gegen die umgebenden Körperstrukturen zu realisieren und damit eine Besiedelung dieser Hohlräume mit Mikroorganismen dauerhaft zu verhindern.

Bekannt sind die Lösungen über eine innere Quetschkonuspassung, eine äußere Dichtlippenpassung und über einen in der Implantatinnenverbindung platzierten O-Ring. Allen Konstruktionen ist eigen, dass sie in vitro ohne mechanische Last den gestellten Anforderungen gerecht werden. Da die Implantat-Aufbauteile unter Last jedoch trotz ausgeklügelter Schnittstellengeometrien und der über die Verschraubung aufgebauten Verspannungen zwischen Implantat und Aufbauteil lastabhängig kippende Bewegungen ausführen, ist von einer immer wiederkehrenden Öffnung der Abdichtung zwischen Implantat und Aufbauteil auszugehen. Entsprechende innere Besiedelungen wurden nachgewiesen. Auch die tägliche klinische Praxis lässt bei Recall-Untersuchungen, bei denen die Verbindung zwischen Implantat und Aufbauteil gelöst wird, die während der Nutzung eingetretene mikrobielle Besiedelung am fötiden Geruch erkennen.

Weiterhin ist bekannt, ein Implantat-Aufbauteil ohne Schraube in einem Implantat mittels geklebter Clip-Verbindung zu befestigen. Mit der Klebung ist eine Füllung der inneren Hohlräume des Implantates verbunden. Der Kleber wird dabei im aktivierten Zustand von außen über ein aufwendiges handhabungsunfreundliches Dosiersystem eingebracht. Dieses Dosiersystem ist (trotz verschiedener technischer Lösungen) in der Präzision seiner Dosiermöglichkeit durch die Aufwendigkeit der Konstruktion begrenzt, da die Beschaffung durch jede Zahnarztpraxis einen marktfähigen Preis voraussetzt. Außerdem beginnt die Verarbeitungszeit des Klebers bereits bei der Mischung der Komponenten im Dosiersystem, so dass bei Verklebung mehrere Implantate mit einem Kleber aus einunddemselben Gebinde eine mit zunehmender Implantatzahl abnehmende Manipulationszeit pro Implantat entsteht.

Dokument EP1 943 977 A1 offenbart ein zahnmedizinisches Implantat gemäß dem Oberbegriff des Anspruchs 1, einen zahnmedizinischen Implantataufbau gemäß dem Oberbegriff des Anspruchs 5.

Um die innere Kontamination und Besiedelung zwei- und mehrteiliger Implantatkonstruktionen mit Körperflüssigkeiten und Erregern zu verhindern, ist ein dauerhafter Abschluss der innerimplantären Hohlräume gegen die keimbeladene Umgebung durch eine Füllmasse erforderlich.

Aufgabe der Erfindung ist es, Mittel zur Verfüllung von nach Einbringung eines Aufbaus in ein Implantat verbleibenden Hohlräumen bereit zu stellen, welche die vorgenannten Nachteile vermeidet. Gemäß der Erfindung wird diese Aufgabe durch die Merkmale des kennzeichnenden Teils des Patentanspruchs 1 gelöst. Mit der Erfindung ist ein zahnmedizinisches Implantat geschaffen, welches die Verfüllung von innerimplantären Hohlräumen ermöglicht. Die Verfüllung erfolgt durch ein in Mikrokapseln gefülltes Fluid, mit denen wenigstens ein Innengewinde des Implantats benetzt ist. Beim Einschrauben einer Schraube in das Innengewinde werden die Mikrokapseln geöffnet, wodurch das Fluid austreten kann. Mikrokapseln sind beispielsweise aus der Textilindustrie bekannt. Die Mikrokapselungstechnik ermöglicht die Entwicklung und Herstellung von membranintegrierten Fluiden. Die Membran dient dabei als Isolier- und Schutzschicht von Umgebungseinflüssen. Die Größe der Mikrokapseln reicht von 0,5 bis 2.000 Mikron. Die Freisetzung des gekapselten Fluids erfolgt durch Zerstörung der Membran.

In Weiterbildung der Erfindung sind zwei untereinander angeordnete Innengewinde angeordnet, wobei nur das dem Kiefer zugewandte untere Innengewinde mit Mikrokapseln versehen ist. Durch das obere, nicht mit Mikrokapseln benetzte Gewinde ist eine temporäre, lösbare Befestigung eines Aufbaus, beispielsweise eines Gingiwerformers ermöglicht. Die Befestigung des endgültigen Aufbaus kann über das zweite, untere Gewinde erfolgen, wobei die verbleibenden Hohlräume durch das in den Mikrokapseln befindliche Fluid befüllt werden. Vorzugsweise hat das Fluid der Mikrokapsel eine Wirkung als Pharmakon und Desinfizierens.

In Ausgestaltung der Erfindung ist in wenigstens einem Innengewinde wenigstens eine Kanal zur Verteilung des Fluids der Mikrokapseln nach deren Zerstörung eingebracht. Hierdurch ist eine gute Verteilung des Fluids bewirkt.

Die gestellte Aufgabe wird weiterhin gelöst durch einen zahnmedizinischen Implantataufbau zur Befestigung in einem zahnmedizinischen Implantat nach dem Patentanspruch 5. Durch die Benetzung des Außengewindes des Gewindezapfens mit Mikrokapseln, welche mit einem Fluid gefüllt sind, ist gleichermaßen die Verfüllung verbleibender Hohlräume nach Zerstörung der Mikrokapseln während des Einschraubvorgangs ermöglicht. Dabei kann der Gewindezapfen durch eine Schraube gebildet sein, welche von dem Implantataufbau aufgenommen ist. Auch hier ist vorteilhaft in dem Außengewinde wenigstens ein Kanal zur Verteilung des Fluids der Mikrokapseln nach deren Zerstörung eingebracht.

Der Erfindung liegt weiterhin die Aufgabe zu Grunde, ein Verfahren zur Verfüllung von nach Einbringung eines Aufbaus in ein Implantat verbleibenden Hohlräumen bereitzustellen, welches die vorgenannten Nachteile vermeidet. Gemäß der Erfindung wird diese Aufgabe durch die Merkmale des Patentanspruchs 9 gelöst. Durch das Benetzen wenigstens eines Innengewindes des Implantats und / oder eines Außengewindes des Implantataufbaus mit Mikrokapseln ist die Verfüllung verbleibender Hohlräume nach Zerstörung der Mikrokapseln während des Einschraubvorgangs bewirkt. Nicht gemäß der Erfindung hat das Fluid der Mikrokapseln eine Wirkung als Pharmakon oder Desinfizienz.

In Weiterbildung der Erfindung werden die Mikrokapseln mit Hilfe eines Zerstäubers auf das wenigstens eine Innengewinde des Implantats und / oder das Außengewinde des Implantataufbaus aufgebracht. Durch dieses Verfahren ist auch eine nachträgliche Behandlung von bereits hergestellten Schrauben ermöglicht.

Denkbar ist auch eine Benetzung der Gewinde mittels eines Zerstäubers vor Ort, unmittelbar vor dem Einschraubvorgang.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

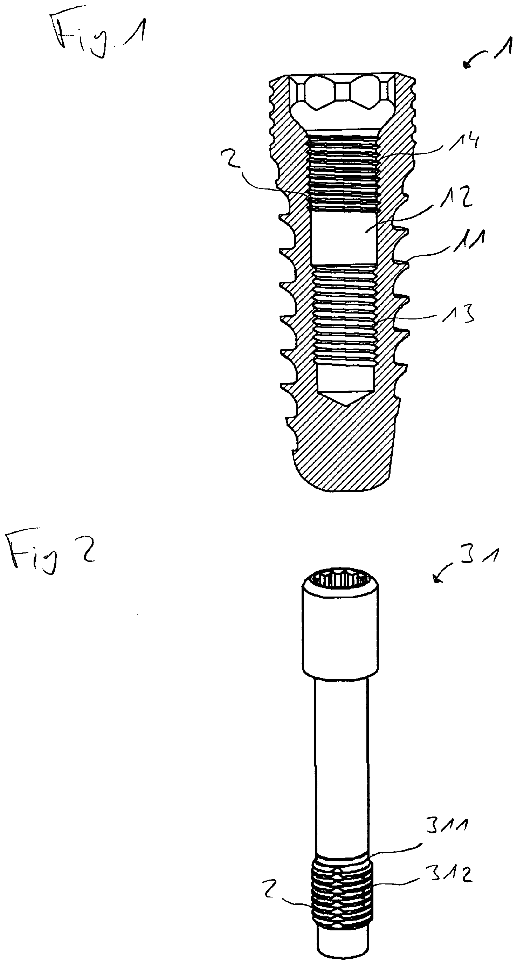

- Figur 1: die schematische Darstellung eines mit Mikrokapseln benetzten Implantats;
- Figur 2: die Darstellung einer mit Mikrokapseln benetzten Schraube eines Implantataufbaus und

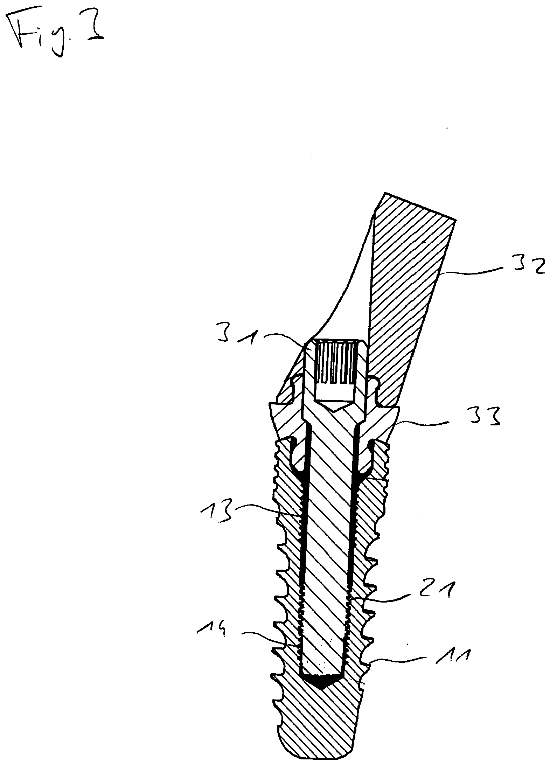

- Figur 3: die Schnittdarstellung eines Implantats mit Implantataufbau nach Beendigung des Einschraubvorgangs und Zerstörung der Mikrokapseln.

Das als Ausführungsbeispiel gewählte Implantat 1 ist aus Titan hergestellt und ist außen umlaufend mit einem Außengewinde 11 versehen. Entlang seiner Mittelachse ist in das Implantat 1 eine Sackbohrung 12 eingebracht, in die beabstandet zueinander zwei Innengewinde 13, 14 eingebracht sind. Dabei ist der Innendurchmesser des dem Grund der Sackbohrung 12 zugewandten Endgewindes 13 kleiner ausgeführt, als der Innendurchmesser des nach außen gerichteten Opfergewindes 14. Im Ausführungsbeispiel ist das Endgewinde 13 in der Größe M 1,6 x 0,2 und das Opfergewinde 14 in der Größe M 1,8 x 0,2 ausgebildet. Zwischen Endgewinde 13 und Opfergewinde 14 ist ein gewindeloses Zwischenstück angeordnet. Im Ausführungsbeispiel ist das Endgewinde 13 mit Mikrokapseln 2 benetzt. Im Ausführungsbeispiel sind die Mikrokapseln 2 mit einem Fluid 21 befüllt, welches ein Kleber mit desinfizierender Wirkung ist.

Der als Ausführungsbeispiel gewählte Implantataufbau ist dreiteilig ausgebildet. Er besteht im Wesentlichen aus einem Aufbaupfosten 32, der auf einem Adapterstück 33 angeordnet ist, wobei durch den Aufbaupfosten 32 und das Adapterstück 33 eine Schraube 31 geführt ist. Das Adapterstück 33 ist derart ausgebildet, dass es in das Implantat 1 einsetzbar ist, wobei ein konisch nach innen zulaufender Rand ausgebildet ist, der mit dem konisch ausgebildeten Rand des Implantats 1 korrespondiert.

Die Schraube 31 weist an ihrem dem Implantat zugewandten Ende einen Gewindezapfen 311 mit einem Außengewinde 312 auf. Der Gewindezapfen 311 ist im Ausführungsbeispiel mit zwei diametral zueinander angeordneten - nicht dargestellten - Kanälen versehen, welche parallel zur Mittelachse der Schraube 31 das Außengewinde 312 des Gewindezapfens 311 kreuzend in die Schraube 31 eingebracht sind. Das Außengewinde 312 des Gewindezapfens 311 ist mit Mikrokapseln 2 benetzt, welche gleichsam mit einem Kleber mit desinfizierender Wirkung befüllt sind.

Im Ausführungsbeispiel wurde das Endgewinde 13 des Implantats 1 sowie das Außengewinde 312 der Schraube 31 unmittelbar vor Befestigung des Implantataufbaus 3 in dem Implantat 1 über eine - nicht dargestellte - Zerstäubungsvorrichtung aufgebracht. Die Zerstäubungsvorrichtung kann beispielsweise in Form einer druckluftgetriebenen Sprühdose ausgebildet sein. Im Anschluss an die Benetzung der Gewinde 13, 312 wird der Implantataufbau 3 mit dem Adapterstück 33 auf das Implantat 1 aufgesetzt und die Schraube 31 wird mit ihrem Gewindezapfen 311 in das Endgewinde 13 des Implantats eingeschraubt. Durch die Reibung der Gewindegänge werden die Mikrokapseln 2 zerstört, wonach das Fluid 21 der Mikrokapseln 2 austritt. Durch die schraubenförmige Bewegung der Gewindegänge wird das austretende Fluid 21 gleichmäßig in den innerimplantären Hohlräumen verteilt, welche anschließend vollständig mit dem Fluid 21 der Mikrokapseln 2 verfüllt sind.

## Patentansprüche

1. Zahnmedizinisches Implantat zur Befestigung in einem Kieferknochen, wobei in das Implantat (1) eine Sackbohrung (12) eingebracht ist, in der wenigstens ein Innengewinde (13,14) angeordnet ist, **dadurch gekennzeichnet, dass** wenigstens ein Innengewinde (13, 14) mit Mikrokapseln (2) versehen ist, welche mit einem Fluid (21) gefüllt sind.

2. Zahnmedizinisches Implantat nach Anspruch 1, **dadurch gekennzeichnet, dass** zwei untereinander angeordnete Innengewinde (13,14) angeordnet sind, wobei nur das dem Kiefer zugewandte untere Innengewinde (13) mit Mikrokapseln (2) versehen ist.

3. Zahnmedizinisches Implantat nach einem der vorgenannten Ansprüche, **dadurch gekennzeichnet, dass** das Fluid (21) der Mikrokapsel (2) eine Wirkung als Pharmakon oder Desinfizienz hat.

4. Zahnmedizinisches Implantat nach einem der vorgenannten Ansprüche, **dadurch gekennzeichnet, dass** in wenigstens einem Innengewinde (13, 14) wenigstens ein Kanal zur Verteilung des Fluids (21) der Mikrokapseln (2) nach deren Zerstörung eingebracht ist.

5. Zahnmedizinischer Implantataufbau zur Befestigung in einem zahnmedizinischen Implantat, umfassend einem Gewindezapfen (311), mit einem Außengewinde (312), mit dem der Gewindezapfen (311) in das zahnmedizinische Implantat (1) einschraubbar ist, **dadurch gekennzeichnet, dass** das Außengewinde (312) des Gewindezapfens (311) mit Mikrokapseln (2) versehen ist, welche mit einem Fluid (21) gefüllt sind.

6. Zahnmedizinischer Implantataufbau nach Anspruch 5, **dadurch gekennzeichnet, dass** der Gewindezapfen (311) durch eine Schraube (31) gebildet ist, welche von dem Implantataufbau aufgenommen ist.

7. Zahnmedizinischer Implantataufbau nach Anspruch 5 oder 6 **dadurch gekennzeichnet, dass** das Fluid (21) der Mikrokapseln (2) eine Wirkung als Pharmakon oder Desinfizienz hat.

8. Zahnmedizinischer Implantataufbau nach einem der Ansprüche 5 bis 7 **dadurch gekennzeichnet, dass** in dem Außengewinde (312) wenigstens ein Kanal zur Verteilung des Fluids (21) der Mikrokapseln (2) nach deren Zerstörung eingebracht ist.

9. Verfahren zum Verfüllen von nach Einbringung eines zahnmedizinischen Implantataufbaus (3) in ein zahnmedizinisches Implantat (1) verbleibenden Hohlräumen, wobei wenigstens ein Innengewinde (13, 14) des Implantats (1) und/oder ein Außengewinde (312) des Implantataufbaus (3) mit Mikrokapseln (2) versehen wird, welche mit einem Fluid (2) gefüllt sind.

10. Verfahren nach Anspruch 9, **dadurch gekennzeichnet, dass** die Mikrokapseln (2) mit Hilfe eines Zerstäubers auf das wenigstens eine Innengewinde (13, 14) des Implantats (1) und/oder das Außengewinde (312) des Implantataufbaus (3) aufgebracht werden.

## Claims

1. Dental implant for securing in a jaw bone, where a blind hole (12) is made in the implant (1) in which at least one internal thread (13, 14) is arranged, **characterised in that** at least one internal thread (13,14) is provided with micro-capsules (2) which are filled with a fluid (21).

2. Dental implant in accordance with claim 1, **characterised in that** two internal threads (13, 14) are arranged one above the other, where only the lower thread (13) facing the jaw is provided with micro-capsules (2).

3. Dental implant in accordance with any of the preceding claims, **characterised in that** the fluid (21) of the micro-capsules (2) acts as a pharmaceutical or disinfectant.

4. Dental implant in accordance with any of the preceding claims, **characterised in that** in at least one internal thread (13, 14) at least one duct is made for distributing the fluid (21) from the micro-capsules (2) following their destruction.

5. Dental implant abutment for securing in a dental implant, comprising a threaded stem (311) with an external thread (312) by means of which the threaded stem (311) can be screwed into the dental implant (1), **characterised in that** the external thread (312) of the threaded stem (311) is provided with micro-capsules (2) which are filled with a fluid (21).

6. Dental implant abutment in accordance with claim 5, **characterised in that** the threaded stem (311) is formed by a screw (31) which is screwed into the dental implant abutment.

7. Dental implant in accordance with claim 5 or claim 6, **characterised in that** the fluid (21) of the micro-capsules (2) acts as a pharmaceutical or disinfectant.

8. Dental implant abutment in accordance with any of the claims 5 to 7, **characterised in that** in the external thread (312) at least one duct is made for distributing the fluid (21) from the micro-capsules (2) following their destruction.

9. Process for filling the cavities remaining after the insertion of a dental implant abutment (3) into a dental implant (1), where at least one internal thread (13,14) of the implant (1) and/or one external thread (312) of the implant abutment (3) is/are provided with micro-capsules (2) which are filled with a fluid (2).

10. Process in accordance with claim 9, **characterised in that** the micro-capsules (2) are applied to the at least one internal thread (13, 14) of the implant (1) and/or the external thread (312) of the implant abutment (3) by means of an atomiser.

## Revendications

1. Implant médical dentaire à fixer dans un os maxillaire, sachant que dans l'implant (1) a été ménagé un trou borgne (12) dans lequel est disposé au moins un filetage intérieur (13, 14), **caractérisé en ce qu'**au moins un filetage intérieur (13, 14) est muni de microcapsules (2) qui ont été remplies d'un fluide (21).

2. Implant médical dentaire selon la revendication 1, **caractérisé en ce que** deux filetages intérieurs (13, 14) sont agencés l'un en dessous de l'autre, sachant que seul le filetage intérieur (13) inférieur regardant la mâchoire est muni de micro-capsules (2).

3. Implant médical dentaire selon l'une des revendications précédentes, **caractérisé en ce que** le fluide (21) des microcapsules (2) a un effet de médicament ou de désinfectant.

4. Implant médical dentaire selon l'une des revendications précédentes, **caractérisé en ce qu'**au moins dans un filetage intérieur (13, 14) a été ménagé au moins un canal chargé de distribuer le fluide (21) des microcapsules (2) après leur destruction.

5. Pilier implantaire médical dentaire à fixer dans un implant médical dentaire, comprenant un pivot fileté (311) avec un filetage extérieur (312) avec lequel il est possible de visser le pivot fileté (311) dans l'implant (1) médical dentaire, **caractérisé en ce que** le filetage extérieur (312) du pivot fileté (311) est muni de micro-capsules (2) qui ont été remplies d'un fluide (21).

6. Pilier implantaire médical dentaire selon la revendication 5, **caractérisé en ce que** le pivot fileté (311) est formé par une vis (31) à laquelle le pilier implantaire sert de logement.

7. Pilier implantaire médical dentaire selon la revendication 5 ou 6, **caractérisé en ce que** le fluide (21) des microcapsules (2) a un effet de médicament ou de désinfectant.

8. Pilier implantaire médical dentaire selon l'une des revendications 5 à 7, **caractérisé en ce que** dans le filetage extérieur (312) a été ménagé au moins un canal servant à répartir le fluide (21) des microcapsules (2) après leur destruction.

9. Procédé pour combler les cavités restantes après l'introduction d'un pilier implantaire (3) médical dentaire dans un implant (1) médical dentaire, sachant qu'au moins un filetage intérieur (13, 14) de l'implant (1) et/ou un filetage extérieur (312) du pilier implantaire (3) est/sont muni/munis de microcapsules (2) qui ont été remplies d'un fluide (21).

10. Procédé selon la revendication 9, **caractérisé en ce que** les micro-capsules (2) sont appliquées à l'aide d'un atomiseur sur au moins un filetage intérieur (13, 14) de l'implant (1) et/ou sur le filetage extérieur (312) du pilier implantaire (3).
